# FASCICULE DE BREVET EUROPEEN

(11) **EP 1 747 926 B1**
(45) Date de publication et mention de la délivrance du brevet: **12.09.2012**
(21) Numéro de dépôt: 06116739.1
(22) Date de dépôt: 06.07.2006
(51) Int. Cl.: B60J 7/00

(54) **Dispositif d'occultation d'un pavillon de véhicule automobile à volets latéraux de compensation et véhicule correspondants**
Beschattungsvorrichtung mit lateralen Ausgleichsklappen für ein KFZ-Dach und dazugehöriges KFZ
Shading device with lateral compensation flaps for a vehicle and vehicle with such a device

(30) Priorité: 08.07.2005 FR 0507355
(43) Date de publication de la demande: 31.01.2007
(73) Titulaire: Advanced Comfort Systems France SAS - ACS France, 79300 Bressuire (FR)
(72) Inventeur: Fourel, Pascal, 35400 SAINT-MALO (FR)
(74) Mandataire: Bioret, Ludovic

(56) Documents cités:
- EP-A- 1 495 889
- DE-A1- 10 331 269
- FR-A- 2 786 809
- US-A1- 2004 160 082

## Description

Le domaine de l'invention est celui de l'occultation de surfaces vitrées d'un véhicule automobile, et notamment de surfaces vitrées correspondant au pavillon et/ou à la partie supérieure du pare-brise de ce dernier. Plus précisément, l'invention concerne les dispositifs mettant en oeuvre une toile d'occultation mobile entre au moins une position repliée et au moins une position dépliée, en particulier pour un pavillon et/ou un pare-brise de véhicule. Un tel dispositif est connu de US 2004/0160082.

De façon assez répandue, les pavillons des véhicules automobiles sont pourvus d'une baie et/ou d'une ouverture vitrée. Dans d'autres cas, le pare-brise est agrandi, par rapport aux véhicules classiques. Les deux caractéristiques peuvent d'ailleurs être combinées, pour fournir une grande surface vitrée.

La tendance actuelle est en effet de proposer des véhicules automobiles présentant de plus en plus de surfaces vitrées. On cherche donc à augmenter tant que faire se peut la surface des vitres latérales, des pare-brises et des lunettes arrière, et également des pavillons.

On développe également des pavillons intégralement, ou essentiellement, vitrés, et ne faisant qu'un, au moins visuellement, avec le pare-brise (absence d'un élément de carrosserie extérieur entre les deux).

Les objectifs de ces développements sont notamment d'offrir :
- une meilleure visibilité pour les occupants du véhicule ;
- une luminosité accrue à l'intérieur du véhicule ;
- une sensation d'espace élargi pour les occupants ;
- une amélioration esthétique générale du véhicule ;
- ...

Diverses solutions ont été proposées pour limiter le passage des rayons du soleil, notamment en utilisant des vitres teintées ou en rapportant un motif filtrant sur la vitre par sérigraphie.

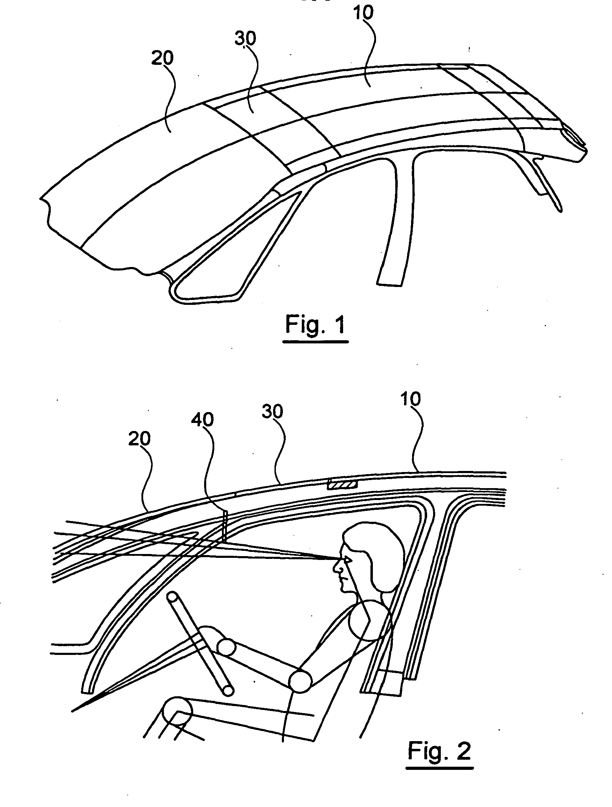

Les figures 1 et 2 illustrent ainsi un véhicule de ce type, sur lequel il est prévu une surface vitrée quasi continue, englobant le pare-brise et le pavillon. Selon ce mode de réalisation, le véhicule comprend un pavillon vitré 10 et un pare-brise 20 se prolongeant par l'intermédiaire d'un panneau vitré intermédiaire 30 en direction du pavillon pour rejoindre celui-ci de façon sensiblement coplanaire et affleurante. Le panneau intermédiaire est bien sûr optionnel, le pare-brise et le pavillon pouvant être configurés pour couvrir toute la surface.

L'invention s'applique en particulier, mais non exclusivement, à ce type de véhicule.

De façon connue, les véhicules automobiles sont généralement équipés de palettes pare-soleil mobiles 40 classiquement montées au voisinage de la partie supérieure du pare-brise, approximativement dans la position représentée sur la figure 2.

Sur les véhicules avec pare-brise classiques, ces palettes pare-soleil sont montées sur un élément de carrosserie au voisinage du bord supérieur du pare-brise, de façon à être mobiles en rotation entre une position rabattue contre le pavillon et une position rabaissée vers le pare-brise pour protéger les yeux du conducteur et/ou du passager avant contre le rayonnement du soleil.

Une technique particulière a été présentée par le demandeur dans le document FR-2 850 061. Selon cette technique, on prévoit une toile d'occultation de pavillon, qui se prolonge au-delà du pavillon, pour occulter la partie supérieure du pare-brise.

Un inconvénient de cette technique est qu'elle n'est pas bien adaptée aux formes de pavillon non rectangulaire. En effet, lorsque les bords du pavillon vitré et du pare-brise s'éloignent l'un de l'autre en allant vers l'avant du véhicule, ce qui est souvent le cas, la toile ne permet pas une occultation parfaite du pavillon, et que les rayons du soleil passent sur le côté du véhicule, entre le bord du pavillon et la toile d'occultation. Cela est parfois très gênant pour les utilisateurs, et réduit fortement l'intérêt du dispositif d'occultation.

En d'autres termes, cette technique n'est pas adaptée au cas où la barre de tirage est guidée dans des rails non parallèles.

L'invention a notamment pour objectif de pallier ces inconvénients de l'art antérieur.

Plus précisément, un objectif de l'invention est de fournir une technique d'occultation d'une surface vitrée correspondant à la partie supérieure d'un pare-brise et/ou d'un pavillon vitré, qui assure une occultation efficace lorsque la surface à occulter n'est pas rectangulaire.

Un autre objectif de l'invention est de fournir une telle technique, qui soit simple à utiliser et à mettre en oeuvre.

L'invention a également pour objectif de fournir une telle technique, qui soit adaptée à l'esthétique et à l'ergonomie des véhicules à pavillon vitré, et notamment des véhicules décrits précédemment, présentant une surface vitrée continue entre le pare-brise et le pavillon.

L'invention a aussi pour objectif de fournir une telle technique, qui permette de compenser d'éventuels jeux de fabrication ou de montage.

Ces objectifs, ainsi que d'autres qui apparaîtront par la suite, sont atteints à l'aide d'un dispositif d'occultation d'un pavillon vitré et/ou d'une partie supérieure d'un pare-brise d'un véhicule automobile, comprenant au moins une toile d'occultation mobile entraînée par une barre de tirage guidée le long de deux rails de guidage entre au moins une position repliée et au moins une position dépliée.
Selon l'invention, lesdits rails de guidage ne sont pas parallèles, et le dispositif comprend au moins un volet latéral de compensation du non-parallélisme desdits rails, occultant au moins en partie l'espace entre ladite toile d'occultation et un desdits rails de guidage, dans ladite position dépliée.

Ainsi, le (ou les) volet(s) occulte(nt) efficacement et simplement la zone non couverte par la toile, sur les bords latéraux.

De façon avantageuse, ledit volet est monté au voisinage dudit rail, et se déplace entre une position ouverte et une position fermée sous l'action de ladite barre de tirage.

Il n'y a donc pas de manipulation supplémentaire, pour la mise en place des volets. Elle se réalise automatiquement, lorsque l'utilisateur (ou un entraînement motorisé) agit sur la barre de tirage.

Selon un mode de réalisation préférentiel, ladite barre de tirage porte au moins un doigt agissant sur ledit volet de façon à la faire passer de ladite position ouverte à ladite position fermée, lorsque ladite toile d'occultation passe de ladite position repliée à ladite position dépliée.

De façon avantageuse, le déplacement dudit volet est progressif, et lié à la progression de ladite barre de tirage.

Ceci permet de s'adapter à un dépliement partiel de la toile.

Préférentiellement, ledit volet est mobile en rotation autour d'un axe placé au voisinage d'un desdits rails.

Dans ce cas, ledit volet peut avantageusement présenter une fente dans laquelle ledit doigt se déplace.

De façon préférentielle, le dispositif comprend des moyens de rappel tendant à ramener ledit volet dans ladite position ouverte.

Selon un autre mode de réalisation, le volet est solidarisé à ladite barre de tirage, et pénètre dans un logement prévu à cet effet dans la structure du véhicule, lors du passage de ladite position dépliée à ladite position repliée.

Généralement, le dispositif de l'invention porte deux volets de compensation symétriques, de part et d'autre de ladite toile d'occultation.

De façon avantageuse, ladite barre de tirage porte au moins une palette pare-soleil.

Ladite palette pare-soleil porte préférentiellement une extension mobile en coulissement et/ou en rotation, destinée à occulter une zone complémentaire non couverte par ladite palette, dans le prolongement dudit volet.

L'invention concerne également les véhicules automobiles équipés de tels dispositifs.

D'autres caractéristiques et avantages de l'invention apparaîtront plus clairement à la lecture de la description suivante d'un mode de réalisation préférentiel de l'invention, donnée à titre de simple exemple illustratif et non limitatif, et des dessins annexés parmi lesquels :
- les figures 1 et 2, discutées en préambule, sont des vues respectivement en perspective et en coupe d'un véhicule destiné à être équipé d'un dispositif d'occultation selon l'invention ;
- les figures 3A et 3B présentent le véhicule des figures 1 et 2, lorsque la toile d'occultation est repliée et dépliée respectivement ;
- les figures 4A et 4B illustrent un premier mode de réalisation du volet du dispositif des figures 3A et 3B, articulé par rapport au rail ;
- les figures 5A, 5B et 5C présentent le fonctionnement du volet des figures 4A et 4B ;
- la figure 6 illustre un second mode de réalisation de l'invention ;
- la figure 7 présente un dispositif selon l'invention, équipé de palettes pare-soleil ;
- les figures 8A à 8C illustrent le fonctionnement des palettes équipées d'une extension ;
- -les figures 9A à 9C illustrent un autre mode de réalisation d'une palette pare-soleil.

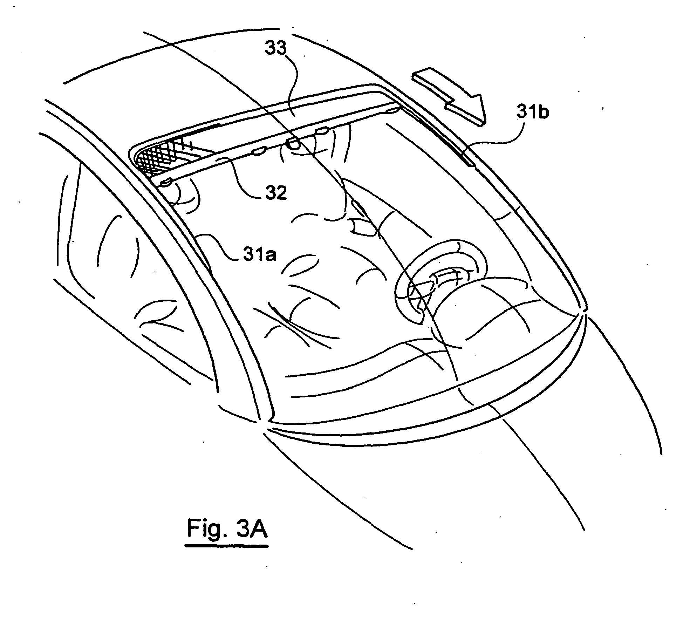

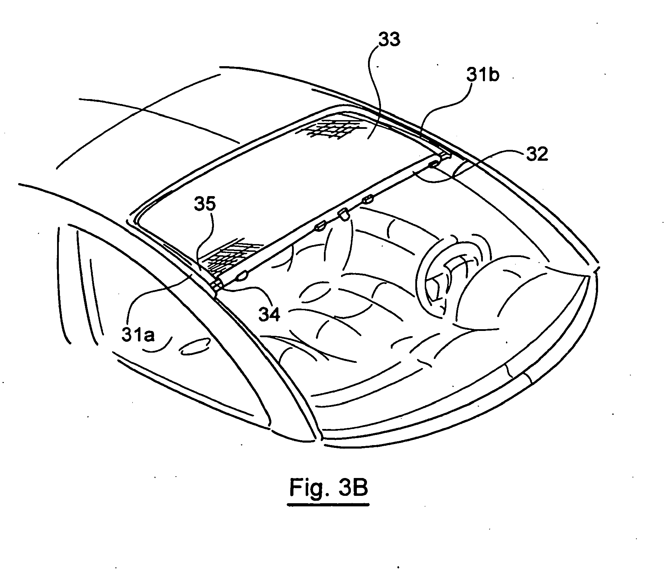

Comme illustré par les figures 3A et 3B, l'invention s'applique au cas où les rails 31a et 31b de guidage de la barre de tirage 32 ne sont pas parallèles, et s'éloignent l'un de l'autre en allant vers l'avant du véhicule. La barre de tirage entraîne une toile d'occultation 33, montée par exemple sur un tube enrouleur (non représenté).

Ainsi que cela apparaît sur la figure 3B, lorsque la toile 33 est dépliée, un espace 35 au voisinage de chaque rail n'est pas occulté. Selon l'invention, un volet 34 occulte cet espace 35, garantissant une bonne occultation globale.

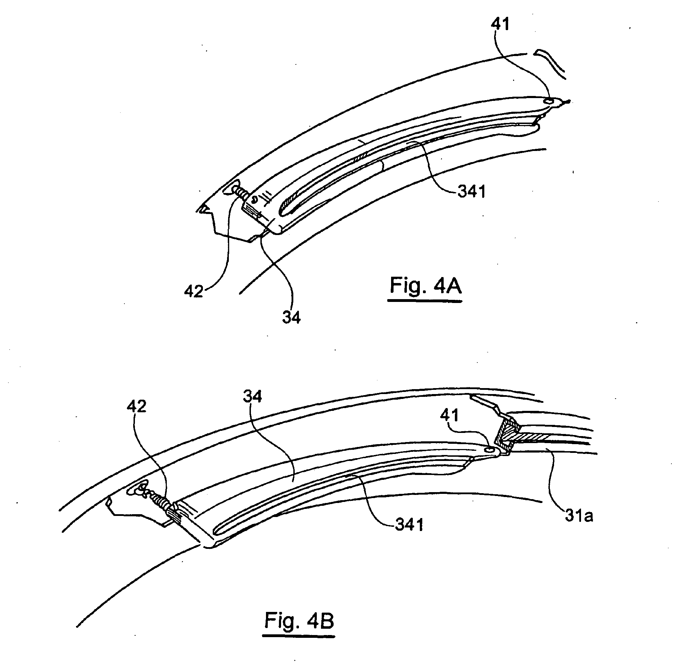

Un exemple de volet est illustré par les figures 4A et 4B. Ce volet 34 est articulé sur un axe 41, monté sous le rail 31a. Un ressort de rappel 42 tend à ramener le volet dans la position repliée de la figure 4A.

Une fente 341 est formée sur le volet 34, dans laquelle un doigt solidaire de la barre de tirage peut circuler. Lors du dépliement de la toile, et de la progression correspondante de la barre de tirage vers l'avant du véhicule, le doigt progresse dans la fente 341, entraînant le volet de la position repliée (figure 4A) vers la position dépliée (figure 4B), tendant en même temps le ressort 42.

Lors du repliement, le doigt s'éloigne, et le ressort 42 ramène le volet 34 dans la position de la figure 4A.

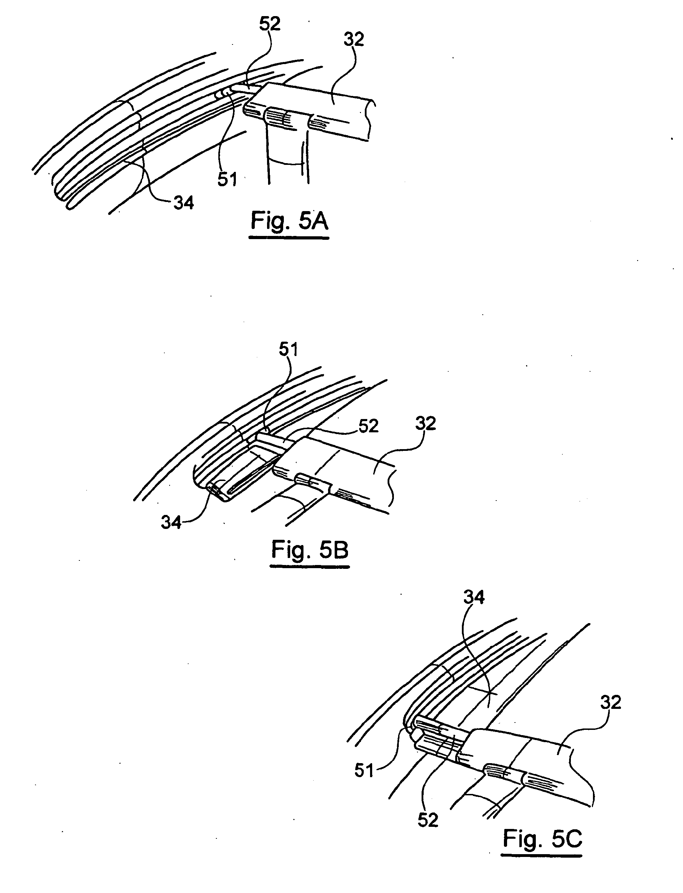

Cette cinématique est illustrée par les figures 5A à 5C. La barre de tirage 32 est reliée au rail 31a par un patin 51 monté sur un élément de liaison 52 coulissant dans la barre de tirage, pour compenser la variation d'écartement des rails.

Le volet 34 s'étend sous le rail, et sous l'élément de liaison 52. Il s'ouvre progressivement, au fur et à mesure de l'avancement de la barre de tirage 32, comme le montre les figures :
- figure 5A : position repliée, volet ouvert ;
- figure 5B : position de dépliement intermédiaire, volet partiellement fermé ;
- figure 5C : position dépliée, volet fermé.

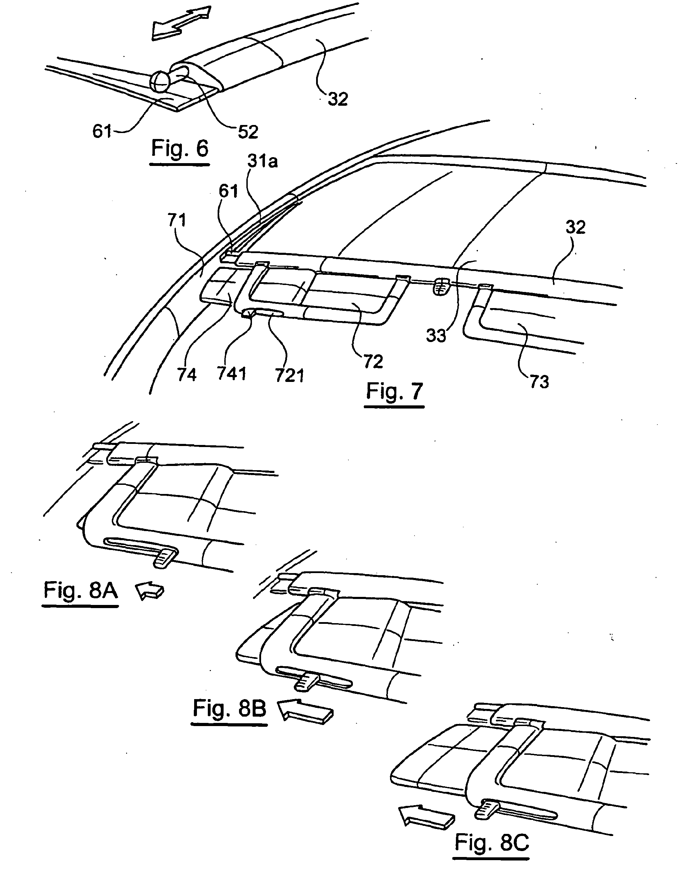

La figure 6 illustre schématiquement un autre mode de réalisation de l'invention , dans lequel le volet 61 est fixe par rapport à la barre de tirage 32. Il s'étend sous l'élément de liaison coulissant 52.

Comme illustré par la figure 7, ce volet fixe 61 s'inscrit dans un logement défini à cet effet dans la garniture 71 du véhicule, sous le rail 31a, lors du repliement de la toile 33.

On note sur cette figure 7 que la barre de tirage 32 porte deux palettes pare-soleil 72 et 73, qui sont articulées par rapport à cette barre de tirage.

Avantageusement, chaque palette comprend une extension 74 amovible, qui permet de prolonger le volet 61. Cette extension est coulissante, et peut être déplacée par l'intermédiaire d'un curseur 741 circulant dans une fente 721 formée dans le cadre du pare-soleil 72.

Les figures 8A à 8C illustrent plus précisément ce mouvement.

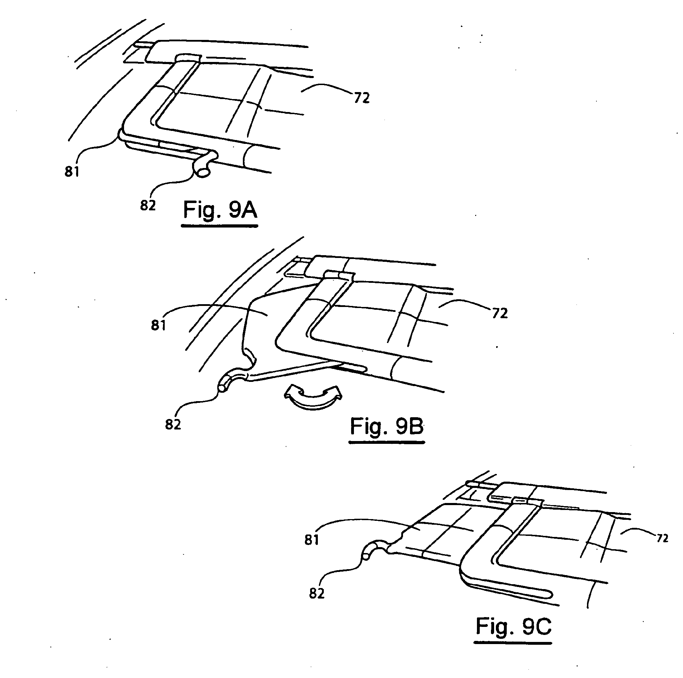

Les figures 9A à 9B présentent un autre de mode de réalisation d'une telle extension 81, mobile en rotation par rapport à la palette 72. Un crochet 82 permet la manipulation de l'extension.

Bien sûr le dépliement et le repliement de ces extensions peuvent être automatisés, par exemple à l'aide de ressorts.

La palette peut être classiquement pleine, ou présenter un cadre à l'intérieur duquel est tendue une toile. Par ailleurs, la toile d'occultation peut être remplacée par deux toiles indépendantes, de chaque côté du véhicule. Dans ce cas, on prévoit deux barres de tirage, portant chacune une palette.

## Revendications

1. Dispositif d'occultation d'un pavillon vitré (10) et/ou d'une partie supérieure d'un pare-brise (20) d'un véhicule automobile, comprenant au moins une toile d'occultation (33) mobile entraînée par une barre de tirage (32) guidée le long de deux rails de guidage (31a, 31b) non-parallèles entre au moins une position repliée et au moins une position dépliée,
**caractérisé**
**en ce qu'**il comprend au moins un volet latéral (34 ou 61) de compensation du non-parallélisme desdits rails, occultant au moins en partie l'espace (35) entre ladite toile d'occultation (33) et un desdits rails de guidage (31a, 31b), dans ladite position dépliée.

2. Dispositif d'occultation selon la revendication 1, **caractérisé en ce que** ledit volet (34) est monté au voisinage dudit rail (31a ou 31b), et se déplace entre une position ouverte et une position fermée sous l'action de ladite barre de tirage (32).

3. Dispositif d'occultation selon la revendication 2, **caractérisé en ce que** ladite barre de tirage porte au moins un doigt agissant sur ledit volet (34) de façon à le faire passer de ladite position ouverte à ladite position fermée, lorsque ladite toile d'occultation (33) passe de ladite position repliée à ladite position dépliée.

4. Dispositif d'occultation selon la revendication 3, **caractérisé en ce que** ledit volet (34) présente une fente (341) dans laquelle ledit doigt se déplace.

5. Dispositif d'occultation selon l'une quelconque des revendications 2 et 3, **caractérisé en ce que** le déplacement dudit volet (34) est progressif, et lié à la progression de ladite barre de tirage (32).

6. Dispositif d'occultation selon l'une quelconque des revendications 3 et 4, **caractérisé en ce que** ledit volet est mobile en rotation autour d'un axe (41) placé au voisinage d'un desdits rails (31a ou 31b).

7. Dispositif d'occultation selon l'une quelconque des revendications 2 à 6, **caractérisé en ce qu'**il comprend des moyens de rappel (42) tendant à ramener ledit volet (34) dans ladite position ouverte.

8. Dispositif d'occultation selon la revendication 1, **caractérisé en ce que** ledit volet (61) est solidarisé à ladite barre de tirage (32), et pénètre dans un logement prévu à cet effet dans la structure (71) du véhicule, lors du passage de ladite position dépliée à ladite position repliée.

9. Dispositif d'occultation selon l'une quelconque des revendications 1 à 8, **caractérisé en ce qu'**il porte deux volets de compensation symétriques, de part et d'autre de ladite toile d'occultation (33).

10. Dispositif d'occultation selon l'une quelconque des revendications 1 à 9, **caractérisé en ce que** ladite barre de tirage porte au moins une palette pare-soleil (72) ou (73).

11. Dispositif d'occultation selon la revendication 10, **caractérisé en ce que** ladite palette pare-soleil (72) ou (73) porte une extension mobile (74) en coulissement et/ou en rotation, destinée à occulter une zone complémentaire non couverte par ladite palette, dans le prolongement dudit volet (61).

12. Dispositif d'occultation selon l'une quelconque des revendications 10 à 11, **caractérisé en ce que** chacune desdites palettes pare-soleil (72) et (73) est formée d'un cadre à l'intérieur duquel est tendue une toile occultante.

13. Véhicule automobile comprenant un dispositif d'occultation d'un pavillon vitré et/ou d'une partie supérieure d'un pare-brise d'un véhicule automobile, comprenant au moins une toile d'occultation (33) mobile entraînée par une barre de tirage (32) guidée le long de deux rails de guidage (31a, 31b) non-parallèles entre au moins une position repliée et au moins une position dépliée,
**caractérisé**
**en ce qu'**il comprend au moins un volet latéral (34) de compensation du non-parallélisme desdits rails (31a, 31b), occultant au moins en partie l'espace (35) entre ladite toile d'occultation (33) et un desdits rails de guidage (31a, 31b), dans ladite position dépliée.

## Claims

1. Shading device for a glazed roof (10) and/or for an upper part of a windscreen (20) of a motor vehicle, said device comprising at least one movable shading cloth (33) which is drawn along by a draw-bar (32) guided along two non-parallel guide rails (31a, 31b) between at least one rolled-up position and at least one opened-out position,
**characterised in that** said device comprises at least one lateral flap (34 or 61) for compensating for the non-parallelism of the said rails, which flap shades, at least in part, the space (35) between the said shading cloth (33) and one of the said guide rails (31a, 31b), in the said opened-out position.

2. Shading device according to claim 1, **characterised in that** the said flap (34) is mounted in the vicinity of the said rail (31a or 31b) and is displaced between an open position and a closed position under the action of the said draw-bar (32).

3. Shading device according to claim 2, **characterised in that** the said draw-bar carries at least one catch which acts on the said flap (34) in such a way as to cause it to pass from the said open position to the said closed position, when the said shading cloth (33) passes from the said rolled-up position to the said opened-out position.

4. Shading device according to claim 3, **characterised in that** the said flap (34) has a slot (341) within which the said catch is displaced.

5. Shading device according to either of claims 2 or 3, **characterised in that** the displacement of the said flap (34) is progressive and is linked to the progression of the said draw-bar (32).

6. Shading device according to either of claims 3 or 4, **characterised in that** the said flap is movable in rotation about a pin (41) located in the vicinity of one of the said rails (31a or 31b).

7. Shading device according to any of claims 2 to 6, **characterised in that** it comprises return means (42) which tend to bring the said flap (34) back into the said open position.

8. Shading device according to claim 1, **characterised in that** the said flap (61) is fastened to the said draw-bar (32) and penetrates into a housing provided for that purpose in the structure (71) of the vehicle, when the transition from the said opened-out position to the said rolled-up position occurs.

9. Shading device according to any of claims 1 to 8, **characterised in that** it carries two symmetrical compensating flaps, on either side of the said shading cloth (33).

10. Shading device according to any of claims 1 to 9, **characterised in that** the said draw-bar carries at least one sun visor (72) or (73).

11. Shading device according to claim 10, **characterised in that** the said sun visor (72) or (73) carries an extension (74) which is movable in a sliding and/or rotating manner and which is intended to shade a supplementary zone, which is not covered by the said sun visor, in the prolongation of the said flap (61).

12. Shading device according to either of claims 10 or 11, **characterised in that** each of the said sun visors (72) and (73) is made up of a frame, inside which a shading cloth is stretched.

13. Motor vehicle comprising a shading device for a glazed roof and/or for an upper part of a windscreen of a motor vehicle, said device comprising at least one movable shading cloth (33) which is drawn along by a draw-bar (32) guided along two non-parallel guide rails (31a, 31b) between at least one rolled-up position and at least one opened-out position, **characterised in that** said device comprises at least one lateral flap (34) for compensating for the non-parallelism of the said rails (31a, 31b), which flap shades, at least in part, the space (35) between the said shading cloth (33) and one of the said guide rails (31a, 31b), in the said opened-out position.

## Patentansprüche

1. Verdunkelungsvorrichtung eines verglasten Autodach (10) und/oder eines oberen Teils einer Windschutzscheibe (20) eines Kraftfahrzeugs, die mindestens ein bewegliches Verdunkelungstuch (33) aufweist, das von einer Zugstange (32) angetrieben wird, die entlang von zwei nichtparallelen Führungsschienen (31a, 31b) zwischen mindestens einer zurückgefalteten und mindestens einer ausgebreiteten Position geführt wird,
**dadurch gekennzeichnet, dass** sie mindestens eine Seitenklappe (34 oder 61) zum Ausgleichen der Nicht-Parallelität der Führungsschienen aufweist, die mindestens einen Teil des Raums (35) zwischen dem Verdunkelungstuch (33) und einer der Führungsschienen (31a, 31b) in der ausgebreiteten Position verdunkelt.

2. Verdunkelungsvorrichtung nach Anspruch 1, **dadurch gekennzeichnet, dass** die Seitenklappe (34) benachbart zu der Führungsschiene (31a oder 31b) montiert ist und sich zwischen einer offenen und einer geschlossenen Position unter der Einwirkung der Zugstange (32) bewegt.

3. Verdunkelungsvorrichtung nach Anspruch 2, **dadurch gekennzeichnet, dass** die Zugstange mindestens einen Finger trägt, der auf die Seitenklappe (34) derart einwirkt, dass sie von der offenen Position zu der geschlossenen Position übergeht, wenn das Verdunkelungstuch (33) von der zurückgefalteten auf die ausgebreitete Position übergeht.

4. Verdunkelungsvorrichtung nach Anspruch 3, **dadurch gekennzeichnet, dass** die Seitenklappe (34) einen Schlitz (341) aufweist, in dem sich der Finger bewegt.

5. Verdunkelungsvorrichtung nach einem der Ansprüche 2 und 3, **dadurch gekennzeichnet, dass** die Bewegung der Seitenklappe (34) progressiv und mit dem Fortschreiten der Zugstange (32) verbunden ist.

6. Verdunkelungsvorrichtung nach einem der Ansprüche 3 und 4, **dadurch gekennzeichnet, dass** die Seitenklappe in Drehung um eine Achse (41), die benachbart zu einen den Führungsschienen (31 a oder 31b) platziert ist, beweglich ist.

7. Verdunkelungsvorrichtung nach einem der Ansprüche 2 bis 6, **dadurch gekennzeichnet, dass** sie Rückstellmittel (42) aufweist, die ein Zurückholen der Seitenklappe (34) in die offene Position anstreben.

8. Verdunkelungsvorrichtung nach Anspruch 1, **dadurch gekennzeichnet, dass** die Seitenklappe (61) an der Zugstange (32) befestigt ist und in eine dazu in der Struktur (71) des Fahrzeugs vorgesehene Aufnahme bei dem Übergang von der ausgebreiteten Position zu der zurückgefalteten Position eindringt.

9. Verdunkelungsvorrichtung nach einem der Ansprüche 1 bis 8, **dadurch gekennzeichnet, dass** sie zwei symmetrische Seitenklappen zum Ausgleich jeweils auf einer Seite des Verdunkelungstuchs (33) aufweist.

10. Verdunkelungsvorrichtung nach einem der Ansprüche 1 bis 9, **dadurch gekennzeichnet, dass** die Zugstange mindestens eine Sonnenblende (72) oder (73) trägt.

11. Verdunkelungsvorrichtung nach Anspruch 10, **dadurch gekennzeichnet, dass** die Sonnenblende (72) oder (73) eine Erweiterung (74) aufweist, die gleitend und/oder rotatorisch beweglich ist, die dazu bestimmt ist, eine komplementäre Zone, die von der Sonnenblende nicht abgedeckt wird, in der Verlängerung der Seitenklappe (61) zu verdunkeln.

12. Verdunkelungsvorrichtung nach einem der Ansprüche 10 bis 11, **dadurch gekennzeichnet, dass** jede der Sonnenblenden (72) und (73) aus einem Rahmen gebildet ist, in dessen Inneren ein Verdunkelungstuch gespannt ist.

13. Kraftfahrzeug, das eine Verdunkelungsvorrichtung eines verglasten Autodaches und/oder eines oberen Teils einer Windschutzscheibe eines Kraftfahrzeugs aufweist, die mindestens ein bewegliches Verdunkelungstuch (33) aufweist, das von einer Zugstange (32) angetrieben wird, die entlang von zwei nichtparallelen Führungsschienen (31a, 31 b) zwischen mindestens einer zurückgefalteten Position und einer ausgebreiteten Position geführt wird,
**dadurch gekennzeichnet, dass** sie mindestens eine Seitenklappe (34) zum Ausgleichen der Nicht-Parallelität der Führungsschienen (31a, 31b) aufweist, die mindestens einen Teil des Raums (35) zwischen dem Verdunkelungstuch (33) und einer der Führungsschienen (31 a, 31 b) in der ausgebreiteten Position verdunkelt.
